# EUROPEAN PATENT SPECIFICATION

(11) **EP 3 472 419 B1**
(45) Date of publication and mention of the grant of the patent: **02.12.2020**
(21) Application number: 17734822.4
(22) Date of filing: 19.05.2017
(51) Int. Cl.: E06B 9/90, E06B 9/72, F16H 1/28, F16H 3/44, F16H 1/46, F16H 35/00

(54) **ELECTRIC DRIVE UNIT FOR ROLL-UP AWNINGS OR BLINDS**
ELEKTRISCHE ANTRIEBSEINHEIT FÜR AUFROLLBARE MARKISEN ODER ROLLVORHÄNGE
UNITÉ D'ENTRAÎNEMENT ÉLECTRIQUE POUR VOLETS ROULANTS OU STORES

(30) Priority: 20.06.2016 IT UA20164505; 20.06.2016 IT UA20164507
(43) Date of publication of application: 24.04.2019
(73) Proprietor: Cherubini S.p.A., 25081 Bedizzole (BS) (IT)
(72) Inventor: CHERUBINI, Lionello, 25081 Bedizzole (BS) (IT)
(74) Representative: Pulieri, Gianluca Antonio
(86) International application number: PCT/IB2017/052961
(87) International publication number: WO 2017/221087

(56) References cited:
- EP-A1- 2 230 415
- EP-A2- 0 976 909
- WO-A1-2007/135705

## Description

The object of the invention is a drive unit for raising and lowering roll-up awnings or blinds, provided with an irreversibility device.

Such drive units are widely used to lower or raise a roll-up awning and are usually provided with an irreversibility device that allows the torque generated by the motor to be transmitted to the engagement shaft with the roll-up awning and prevent the torque generated by the roll-up awning, for example due to the weight just when it is raised, from driving the motor in rotation and cause the accidental lowering of the awning.

There are numerous drive unit solutions provided with irreversibility devices.

A known solution involves the use of an irreversibility device with electromagnetic actuation. However, such groups have some drawbacks, such as energy consumption due to electromagnetic drive and the tendency to overheat when activated for a prolonged period of time.

Further solutions, instead, provide a mechanical irreversibility device. Such solutions involve the narrowing or widening of the turns of a propeller spring, which thus scrap against the inner or outer surface of a fixed bush coaxial to such a spring, thus causing the desired resistance to rotation. Such solutions are illustrated, for example, in EP-A-0976909 and EP-A-2230415.

Such solutions, however, have some drawbacks, such as assembly difficulties, repeatability of the behaviour, and component reliability.

The object of the present invention is to provide a drive unit with an electric motor and an irreversibility device that meets the requirements of the field and at the same time overcomes the drawbacks mentioned above with reference to the prior art.

Such an object is achieved by a drive unit according to claims 1 and 8. The dependent claims describe further embodiments of the invention.

The features and the advantages of the drive unit according to the first solution of the present invention as defined in independent claim 1 will appear more clearly from the following description, made by way of an indicative and non-limiting example with reference to the following figures, in which:
- figure 1 shows a view in separate parts of a drive unit according to a first embodiment of the present invention;
- figure 2 shows a side view of the drive unit in figure 1;
- figure 3 shows a view of an irreversibility device of the drive unit in figure 1; and
- figure 4 shows a view of an irreversibility device of a drive unit according to a further embodiment of the present invention.

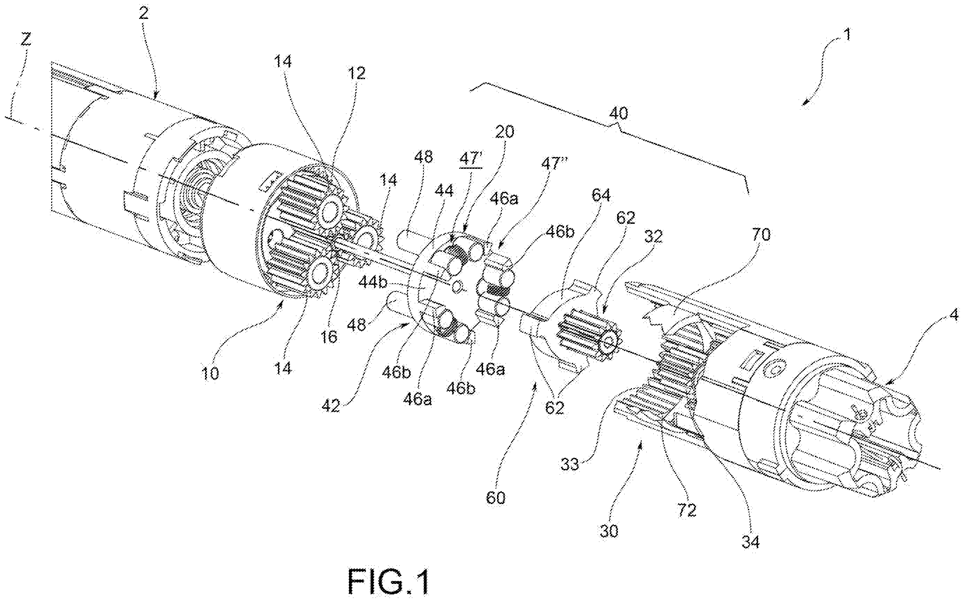

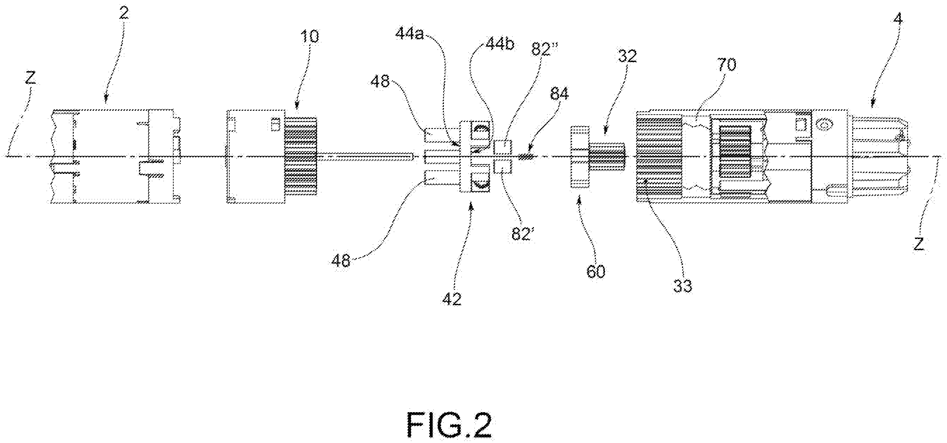

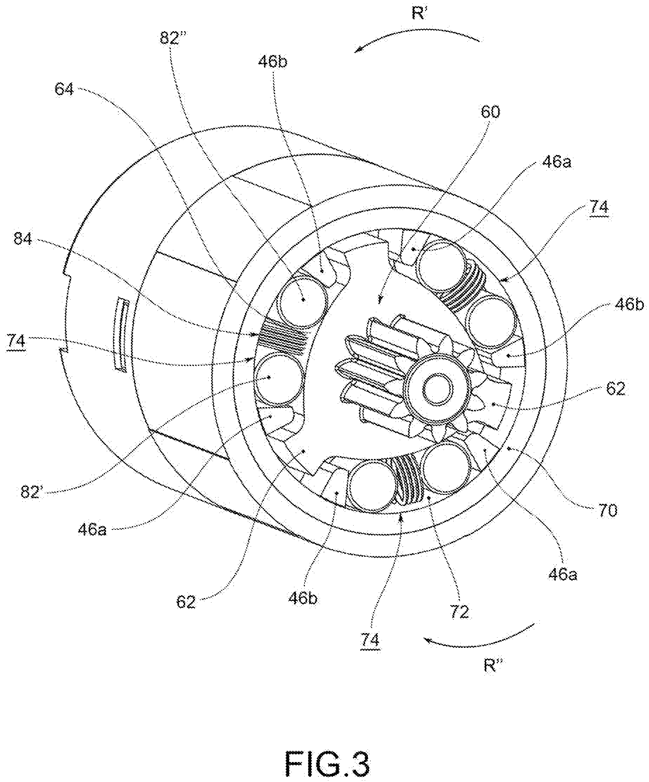

With reference to the accompanying figures 1 to 4, reference numeral 1 generally indicates a drive unit for a roll-up awning or blind, comprising an electric motor 2 suitable for generating a torque along a main axis Z, either directly or via a kinematic transmission.

The electric motor 2 is arranged at a rear end of the drive unit 1, while at the front end, said drive unit is provided with an engagement shaft 4 rotatable coaxially to said main axis Z for the connection with a winding pin of the roll-up awning or blind.

The drive unit 1 further comprises a planetary gear configured to reduce the transmission ratio (and thus multiply the torque) from the electric motor 2 towards the engagement shaft 4.

Preferably, the planetary gear is multistage, consisting of several cascade reduction stages; for example, said planetary gear consists of three reduction stages.

A downstream reduction stage 10 comprises a first fixed crown 12 provided with inner teeth, first planet wheels 14 that engage with the first crown 12, and a first sun gear 16 arranged coaxially to the main axis Z and engaging with the first planet wheels 14. The first sun gear 16 receives the torque coming from the electric motor (either directly or through a further reduction stage upstream of said downgrade stage).

The downstream stage also includes a planet-carrier 20 applicable to the planet wheels 14 and intended to transmit the torque downstream of said upstream stage.

A downstream reduction stage 30 of the planetary gear placed downstream of the upstream stage 10 comprises a second sun gear 32 rotatable coaxially to the main axis Z and intended to receive the torque from the upstream stage 10, a second fixed crown 33, provided with inner teeth, and second planet wheels 34 which engage with the second crown; the second sun gear 32 engages with the second planet wheels 34.

The downstream stage 30 further comprises a second planet-carrier (not shown) rotated by the second planet wheels 34 and intended to transmit the torque downstream, for example directly to the engagement shaft 4 or to a further reduction stage downstream.

The drive unit 1 further comprises an irreversibility device 40, functionally operating between the upstream reduction stage 10 and the downstream reduction stage 30.

Said irreversibility device 40 transmits the torque from upstream to downstream and prevents the rotation from downstream to upstream.

The irreversibility device 40 comprises a driver component 42 integral in rotation with the planet wheels 14 of the upstream stage 10; for example, according to the embodiment shown, the driver component 42 consists of the same planet-carrier 20 of said upstream stages 10 and is thus rotatable about the main axis Z.

According to a preferred embodiment, said driver component 42 comprises a base 44, for example consisting of a disc-shaped plate, provided with a rear face 44a and a front face 44b facing downstream.

The driver component 42 further comprises at least one pair of abutments 46a, 46b projecting axially from the front face 44b of base 44. Preferably, said abutments 46a, 46b are circumferentially spaced and arranged peripherally to base 44. In the embodiment shown, the driver component comprises three pairs of abutments.

In other words, said abutments 46a, 46b follow each other circumferentially, forming a brake compartment 47' therebetween between two abutments 46a, 46b of the same pair and an engagement compartment 47" between two abutments 46a, 46b of different pairs.

Preferably, moreover, the driver component 42 comprises a plurality of pins 48 projecting axially from the rear face 44a of base 44 attached to said base 44 to engage it integrally with the planet wheels 14 of the upstream stage 10.

The irreversibility device 40 further comprises a driven component 60 coaxial to the main axis Z and engageable in rotation with the driver component 42.

The driven component 60 is intgegral in rotation with the sun gear 32 of the downstream stage 30; for example, the driven component 60 and the sun gear 32 form a single body.

Preferably, the driven component 60 consists of a suitably shaped plate and is provided with at least one protuberance 62 peripherally to said plate, adapted to insert in a labile manner in the respective engagement compartment 47" of the driver component 42.

In other words, according to a preferred embodiment, the driven component 60 is received on the front face 44b of base 44 of the driver component 42 so that each protuberance 62 is received with circumferential clearance in the respective engagement compartment 47".

The driven component 60 further comprises, between said protuberances 62, arched or flat functional surfaces 64, for example consisting of portions of the lateral surface of the plate that forms said driven component 60.

In a rest configuration, when the driven component 60 is applied to the driver component 42 and protuberances 62 are accommodated in the engagement compartments 47", the functional surfaces 64 lie between abutments 46a, 46b, radially delimiting the respective brake compartments 47'.

The irreversibility device 40 further comprises a tubular container body 70, for example shaped as a ring, provided with a cylindrical inner lateral surface 72, coaxial to the main axis Z.

Abutments 46a, 46b, the protuberances 62 and the driven body 60 are accommodated inside the container body 70.

In particular, in a rest configuration, abutments 46a, 46b of the driver component 42, the functional surfaces 64 of the driven component 60 and the lateral surface 72 of the container body 70 define compartments 74 having at the bottom the front face 44b of base 44 of the driver component 42.

The functional surfaces 64 are shaped so that compartments 74 have the maximum radial dimension at the centre and taper to the ends, i.e. towards abutments 46a, 46b.

For example, said functional surfaces 64 are cylindrical circular surface portions eccentric with respect to the main axis Z.

The irreversibility device 40 further comprises, in each compartment 74, a pair of rolling bodies 82', 82", for example shaped as spheres or cylinders, and a spacer element 84 placed therebetween.

The spacer element 84, suitably dimensionally calibrated, keeps the rolling bodies circumferentially spaced so as to maintain a position close to the respective abutment 46a, 46b.

Preferably, said spacer element 84 is an elastic element, such as a helical spring, suitable for operating permanently on said rolling bodies to space them.

In a first operating condition in which the roll-up is to be lifted, the electric motor 2 is started and it exerts a torque that forces a rotation to the engagement shaft 4 according to a first rotation direction, such as counter-clockwise R'.

In this operating condition, the driver component 42 performs an anti-clockwise rotation R' and one of abutments 46b contacts one of the rolling bodies 82", thus pushing it.

The rolling body 82", pushed by abutment 46b, thus moves towards the centre of compartment 74, provided with a greater radial dimension. Therefore, the rolling body 82" does not cause any interference with the inner surface 72 or with the functional surface 64.

At the same time, by virtue of the rotation of the driver component 42, abutment 46a rotates a protuberance 62 of the driven body 60, thus pulling it in rotation. The transmission of the torque from upstream to downstream of the irreversibility device is thus obtained.

The behavior of the drive unit, and in particular of the irreversibility device, is the same in the case of a torque transmitted from the motor to downstream in the other direction of rotation.

In a second operating condition, for example due to the persistence of the roll-up awning in a raised condition, the roll-up awning exerts a torque on the engagement shaft 4 in a rotation direction, such as clockwise R".

The rotation of the engagement shaft 4 in a clockwise direction causes the driven body 60 to rotate in clockwise direction and to wedge the rolling body 82' towards the ends of the respective compartment 64, thus creating an interference with the inner surface 72 which blocks the rotation of the driven body 60.

The behavior of the drive unit, and in particular of the irreversibility device, is the same in the case of a torque transmitted from the engagement shaft to upstream in the other direction of rotation.

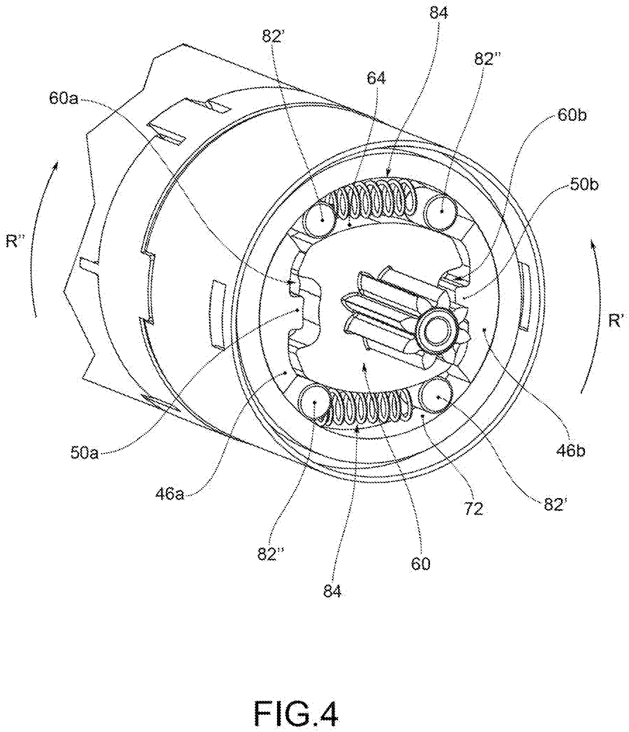

According to a further embodiment (figure 4), the driver component 42 comprises only a pair of abutments 46a, 46b, from which respective teeth 50a, 50b project radially.

The driven component 60 is provided with a pair of loops 62a, 62b peripherally to said plate, adapted to receive the respective tooth 50a, 50b.

In a rest configuration, abutments 46a, 46b of the driver component 42, the functional surfaces 64 of the driven component 60 and the lateral surface 72 of the container body 70 define two compartments 74 having at the bottom the front face 44b of base 44 of the driver component 42.

Innovatively, the drive unit according to the present invention overcomes the drawbacks of the prior art, since it has a particularly simple assembly.

Moreover, advantageously, the drive unit is particularly reliable, as the components are robust and not subject to high stresses.

The irreversibility device 40 is arranged, according to the embodiment shown, between the first and the second stage of the planetary gear.

According to an embodiment variant, the irreversibility device is placed between the second and the third stage of the planetary gear.

According to further embodiment variants, the irreversibility device is placed upstream of the first stage or downstream of the last stage.

The features and the advantages of the drive unit according to an alternative solution of the present invention as defined in independent claim 8 will appear more clearly from the following description, made by way of an indicative and non-limiting example with reference to the following figures, in which:

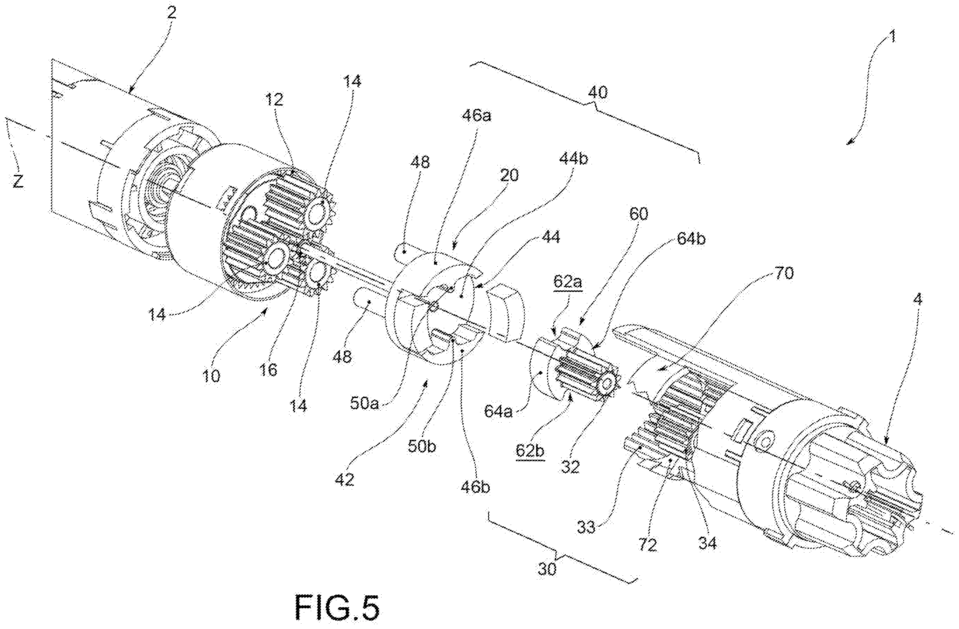

- figure 5 shows a view in separate parts of a drive unit according to the alternative solution of the present invention;

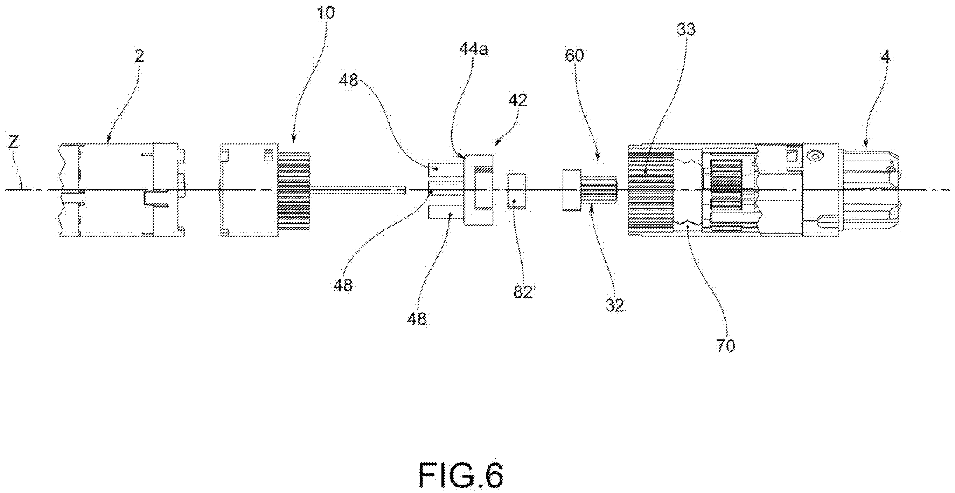

- figure 6 shows a side view of the drive unit in figure 5; and

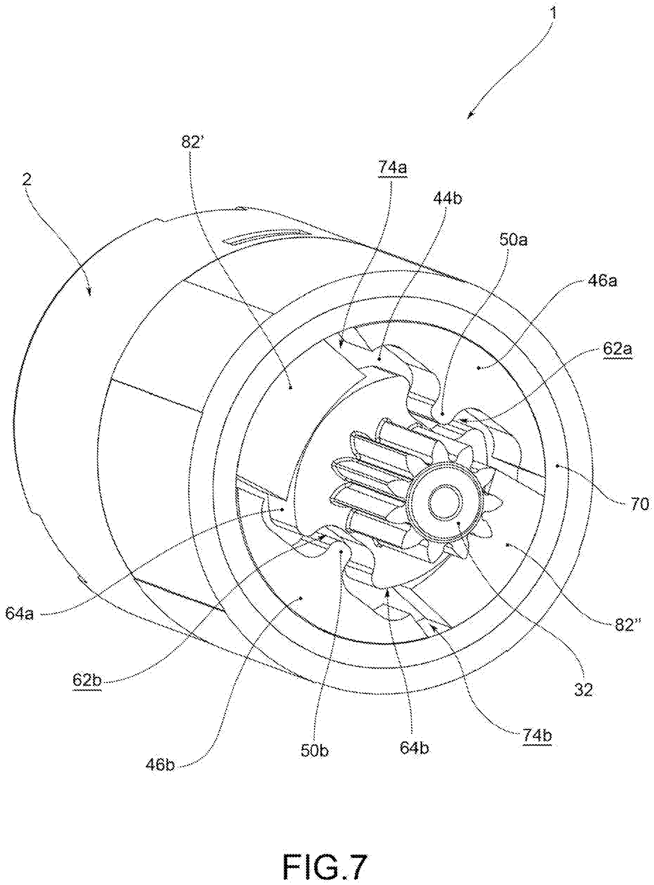

- figure 7 shows a view of an irreversibility device of the drive unit according to an embodiment of the alternative solution of the present invention.

With reference to the accompanying figures 5 to 7, reference numeral 1 generally indicates a drive unit for a roll-up awning or blind, comprising an electric motor 2 suitable for generating a torque along a main axis Z, either directly or via a kinematic transmission.

The electric motor 2 is arranged at a rear end of the drive unit 1, while at the front end, said drive unit is provided with an engagement shaft 4 rotatable coaxially to said main axis Z for the connection with a winding pin of the roll-up awning or blind.

The drive unit 1 further comprises a planetary gear configured to reduce the transmission ratio (and thus multiply the torque) from the electric motor 2 towards the engagement shaft 4.

Preferably, the planetary gear is multistage, consisting of several cascade reduction stages; for example, said planetary gear consists of three reduction stages.

A downstream reduction stage 10 comprises a first fixed crown 12 provided with inner teeth, first planet wheels 14 that engage with the first crown 12, and a first sun gear 16 arranged coaxially to the main axis Z and engaging with the first planet wheels 14. The first sun gear 16 receives the torque coming from the electric motor (either directly or through a further reduction stage upstream of said downgrade stage).

The downstream stage also includes a planet-carrier 20 applicable to the planet wheels 14 and intended to transmit the torque downstream of said upstream stage.

A downstream reduction stage 30 of the planetary gear placed downstream of the upstream stage 10 comprises a second sun gear 32 rotatable coaxially to the main axis Z and intended to receive the torque from the upstream stage 10, a second fixed crown 33, provided with inner teeth, and second planet wheels 34 which engage with the second crown; the second sun gear 32 engages with the second planet wheels 34.

The downstream stage 30 further comprises a second planet-carrier (not shown) rotated by the second planet wheels 34 and intended to transmit the torque downstream, for example directly to the engagement shaft 4 or to a further reduction stage downstream.

The drive unit 1 further comprises an irreversibility device 40, operatively arranged between the upstream reduction stage 10 and the downstream reduction stage 30.

Said irreversibility device 40 transmits the torque from upstream to downstream and prevents the rotation from downstream to upstream.

The irreversibility device 40 comprises a driver component 42 integral in rotation with the planet wheels 14 of the upstream stage 10; for example, according to the embodiment shown, the driver component 42 consists of the same planet-carrier 20 of said upstream stage 10 and is thus rotatable about the main axis Z.

According to a preferred embodiment, said driver body 42 comprises a base 44, for example consisting of a disc-shaped plate, provided with a rear face 44a and a front face 44b facing downstream.

The driver component 42 further comprises at least one pair of abutments 46a, 46b projecting axially from the front face 44b of base 44.

Preferably, said abutments 46a, 46b are arranged diametrically opposed, have a predefined circumferential extension and are arranged peripherally to base 44 spaced circumferentially.

Moreover, the driver component 42 comprises a pair of teeth 50a, 50b projecting axially from the front face 44b of base 44, also spaced circumferentially.

According to a preferred embodiment, said teeth 50a, 50b are radially projecting from the respective abutment 46a, 46b, preferably in a median position with respect to them.

Preferably, moreover, the driver body 42 comprises a plurality of pins 48 projecting axially from the rear face 44a of base 44 attached to said base 44 to engage it integrally with the planet wheels 14 of the upstream stage 10.

The irreversibility device 40 further comprises a driven component 60 coaxial to the main axis Z and engageable in rotation with the driver component 42.

The driven component 60 is integral in rotation with the sun gear 32 of the downstream stage 30; for example, the driven component 60 and the sun gear 32 form a single body.

Preferably, the driven component 60 consists of a suitably shaped plate and is provided with a pair of loops 62a, 62b made peripherally to said plate, each adapted to receive in a labile manner circumferentially the respective tooth 50a, 50b of the driver component 42.

In other words, according to a preferred embodiment, the driven component 60 is received on the front face 44b of base 44 of the driver component 42 so that teeth 50a, 50b are received with circumferential clearance in loops 62a, 62b.

The driven component 60 further comprises, between said loops 62a, 62b, a pair of arched or flat functional surfaces 64a, 64b, for example consisting of portions of the lateral surface of the plate that forms said driven component 60.

In a rest configuration, when the driven component 60 is applied to the driver component 42 and teeth 50a, 50b are received in loops 62a, 62b, the functional surfaces 64a, 64b are arranged between abutments 46a, 46b.

The irreversibility device 40 further comprises a tubular container body 70, for example shaped as a ring, provided with a cylindrical inner lateral surface 72, coaxial to the main axis Z.

Abutments 46a, 46b, teeth 50a, 50b and the driven body 60 are accommodated inside the container body 70.

In particular, in a rest configuration, abutments 46a, 46b of the driver component 42, the functional surfaces 64a, 64b of the driven component 60 and the lateral surface 72 of the container body 70 define a pair of compartments 74a, 74b having at the bottom the front face 44b of base 44 of the driver component 42.

The functional surfaces 64a, 64b are shaped so that compartments 74a, 74b have the maximum radial dimension at the centre and taper to the ends, i.e. towards abutments 46a, 46b.

For example, said functional surfaces 64a, 64b are cylindrical circular surface portions eccentric with respect to the main axis Z.

The irreversibility device 40 further comprises, in each compartment 74a, 74b, at least one sliding body 82', 82", for example shaped as an elongated parallelepiped arched in the circumferential direction.

In particular, said sliding body 82', 82" has a circumferential extension smaller than that of the respective compartment 74a, 74b.

Preferably, the sliding body 82', 82" is made as a solid block, preferably of plastic material.

In a first operating condition in which the roll-up is to be lifted, the electric motor 2 is started and it exerts a torque that forces a rotation to the engagement shaft 4 according to a first rotation direction, such as counter-clockwise R'.

In this operating condition, the driver body 42 performs an anti-clockwise rotation R' and each abutment 46a, 46b contacts the sliding bodies 82', 82", thus pushing them. The sliding body 82', 82" does not cause any interference with the inner surface 72 or with the functional surface 64a, 64b such as to block the rotation thereof.

At the same time, by virtue of the rotation of the driver body 42, said driver body 42 rotatably engages the driven body 60; for example, at least one of teeth 50a, 50b engages with the driven body 60, thus entraining it in rotation. The transmission of the torque downstream of the irreversibility device is thus obtained.

The behaviour of the drive unit, and in particular of the irreversibility device, is the same in the case of a torque transmitted from the motor to downstream in the other direction of rotation.

In a second operating condition, for example due to the persistence of the roll-up awning in a raised condition, the roll-up awning exerts a torque on the engagement shaft 4 in a rotation direction, such as clockwise R".

The rotation of the engagement shaft 4 in a clockwise direction causes the driven body 60 to rotate in clockwise direction and to wedge the sliding body 82', 82" towards the ends of the respective compartment 74a, 74b, thus creating an interference with the inner surface 72 which blocks the rotation of the driven body 60.

The behaviour of the drive unit, and in particular of the irreversibility device, is the same in the case of a torque transmitted from the engagement shaft to upstream in the other direction of rotation.

Innovatively, the drive unit according to the alternative solution of the present invention overcomes the drawbacks of the prior art, since it has a particularly simple assembly.

Moreover, advantageously, the drive unit is particularly reliable, as the components are robust and not subject to high stresses.

The irreversibility device 40 is arranged, according to the embodiment shown, between the first and the second stage of the planetary gear.

According to an embodiment variant, the irreversibility device is placed between the second and the third stage of the planetary gear.

According to further embodiment variants, the irreversibility device is placed upstream of the first stage or downstream of the last stage.

Moreover, according to the embodiment shown, the driven body is provided with loops and the driver body with teeth.

According to a further embodiment, the driven body is provided with teeth and the driver body with loops.

According to an even further embodiment, a plurality of pairs of abutments is provided, for example three pairs, between which a compartment is defined, for example three compartments, such that a respective sliding body is received in each compartment.

## Claims

1. Drive unit (1) for raising and lowering roll-up awnings or blinds, comprising:
- an electric motor (2) and an engagement shaft (4) rotatable about a main axis (Z), intended for connection to the roll-up awning or blinds;
- a planetary gear placed between the electric motor (2) and the engagement shaft (4), comprising an upstream reduction stage (10) and a downstream reduction stage (30) ;
- an irreversibility device (40) placed between the upstream stage (10) and the downstream stage (30) suitable to transmit a rotation from upstream to downstream and to block a rotation from downstream to upstream; **characterized in that** said irreversibility device comprises
- a driver component (42) rotatable together with planet wheels (14) of the upstream stage (10), provided with at least one pair of abutments (46a, 46b) spaced circumferentially;
- a driven component (60) engageable for rotation with the driver component (42) and rotatable together with a sun gear (32) of the downstream stage (30), provided with at least one functional surface (64);
- a tubular container body (70) provided with a cylindrical inner lateral surface (72), in which are housed the abutments (46a, 46b) of the driver component (42) and the functional surface (64) of the driven component (60), which, together with the lateral surface (72) of the container body (70), define a compartment (74), wherein said functional surface (64) is shaped so that the compartments (74) have a maximum radial dimension at the centre and are tapered towards the circumferential ends;
- arranged in the compartment (74), a pair of rolling bodies (82', 82") displaceable on the functional surface (64) and a spacer element (84) placed between said rolling bodies (82', 82''), to maintain the two rolling bodies (82', 82") towards the circumferential ends of the compartment (74);
wherein, in a first operating condition in which the electric motor imposes a downstream rotation, at least one of said abutments (46b) goes in contact with one of the rolling bodies (82") and pushes it towards the centre of the compartment (74) and the driver component (42) engages the driven body (60) in rotation; and wherein, in a second operating condition in which the engagement shaft (4) tries to transmit an upstream rotation, the driven body (60) rotates so as to wedge at least one of said rolling bodies (82') towards the circumferential end of the compartment (74), blocking the relative rotation with the inner surface (72), avoiding the entrainment in rotation of the driver component (42).

2. Drive unit according to claim 1, wherein the spacer element (84) is an elastic element which operates permanently between the rolling bodies (82', 82") to move them away.

3. Drive unit according to claim 1 or 2, wherein the planetary gear contains three reduction stages and the upstream stage (10) is the first reduction stage, placed directly downstream of the electric motor, and the downstream stage (30) is the second reduction stage.

4. Drive unit according to claim 1 or 2, wherein the planetary gear contains three reduction stages and the upstream stage (10) is the second reduction stage and the downstream stage (30) is the third reduction stage, placed directly upstream of the engagement shaft (4).

5. Drive unit according to any of the preceding claims, wherein the driver component (42) comprises a base (44) in the form of a plate, having a rear face (44a) and a front face (44b), said abutments (46a, 46b) being axially projecting from said front face (44b).

6. Drive unit according to claim 5, wherein said driven component (60) comprises at least one radially projecting protuberance (62), which can be housed with circumferential clearance between the abutments (46a, 46b) of two contiguous pairs.

7. Drive unit according to any of the preceding claims, wherein the functional surface (64) is a portion of a circular cylindrical surface eccentric with respect to the main axis (Z).

8. Drive unit (1) for raising and lowering roll-up awnings or blinds, comprising:
- an electric motor (2) and an engagement shaft (4) rotatable about a main axis (Z), intended for connection to the roll-up awning or blinds;
- a planetary gear placed between the electric motor (2) and the engagement shaft (4), comprising an upstream reduction stage (10) and a downstream reduction stage (30) ;
- an irreversibility device (40) placed between the upstream stage (10) and the downstream stage (30) suitable to transmit a rotation from upstream to downstream and to block a rotation from downstream to upstream; **characterized in that** said irreversibility device comprises
- a driver component (42) rotatable together with planet wheels (14) of the upstream stage (10), provided with at least one pair of abutments (46a, 46b) spaced circumferentially;
- a driven component (60) engageable in rotation with the driver component (42) and rotatable together with a sun gear (32) of the downstream stage (30), provided with a pair of functional surfaces (64a, 64b);
- a tubular container body (70) provided with a cylindrical inner lateral surface (72), in which are housed the abutments (46a, 46b) of the driver component (42) and the functional surfaces (64a, 64b) of the driven component (64), which, together with the lateral surface (72) of the container body (70), define a pair of compartments (74a,74b), wherein said functional surfaces (64a, 64b) are shaped so that the compartments (74a, 74b) have a maximum radial dimension at the centre and are tapered towards the circumferential ends;
- arranged in each compartment (74a, 74b), at least one sliding body (82', 82") displaceable on the respective functional surface (64a, 64b);
wherein, in a first operating condition in which the electric motor imposes a downstream rotation, each abutment (46a, 46b) goes in contact with one of the sliding bodies (82', 82") pushing it and the driver body (42) engages the driven body (60) in rotation; and wherein, in a second operating condition in which the engagement shaft (4) tries to transmit an upstream rotation, the driven body (60) rotates so as to wedge the sliding body (82', 82") towards the circumferential end of the respective compartment (64a, 64b), blocking the relative rotation with the inner surface (72), avoiding the entrainment in rotation of the driver component (42).

9. Drive unit according to claim 8, wherein the sliding body has extension along the circumferential direction.

10. Drive unit according to claim 8 or 9, wherein the sliding body is made of plastic material.

11. Drive unit according to any of claims 8 to 10, wherein the planetary gear contains three reduction stages and the upstream stage (10) is the first reduction stage, placed directly downstream of the electric motor, and the downstream stage (30) is the second reduction stage.

12. Drive unit according to any of claims 8 to 10, wherein the planetary gear contains three reduction stages and the upstream stage (10) is the second reduction stage and the downstream stage (30) is the third reduction stage, placed directly upstream of the engagement shaft (4).

13. Drive unit according to any of claims 8 to 12, wherein the driver body (42) comprises a base (44) in the form of a plate, having a rear face (44a) and a front face (44b), said abutments (46a, 46b) being axially projecting from said front face (44b).

14. Drive unit according to any of claims 8 to 13, wherein each functional surface (64a, 64b) is a portion of a circular cylindrical surface eccentric with respect to the main axis (Z).

## Patentansprüche

1. Antriebseinheit (1) zum Anheben und Absenken aufrollbarer Markisen oder Jalousien, umfassend:
- einen Elektromotor (2) und eine um eine Hauptachse (Z) drehbare Eingriffswelle (4), welche für eine Verbindung der aufrollbaren Markise oder Jalousien vorgesehen ist;
- ein zwischen dem Elektromotor (2) und der Eingriffswelle (4) platziertes Planetengetriebe, welches eine vorgelagerte Untersetzungsstufe (10) und eine nachgelagerte Untersetzungsstufe (30) umfasst;
- eine zwischen der vorgelagerten Stufe (10) und der nachgelagerten Stufe (30) platzierte Nichtumkehrbarkeitsvorrichtung (40), welche dazu geeignet ist, eine Drehung von vorgelagert zu nachgelagert zu übertragen und eine Drehung von nachgelagert zu vorgelagert zu blockieren;
**dadurch gekennzeichnet, dass** die Nichtumkehrbarkeitsvorrichtung umfasst
- eine zusammen mit Planetenrädern (14) der vorgelagerten Stufe (10) drehbare Antriebskomponente (42), welche mit wenigstens einem Paar in Umfangsrichtung voneinander beabstandeter Anschläge (46a, 46b) bereitgestellt ist;
- eine für eine Drehung mit der Antriebskomponente (42) in Eingriff bringbare und zusammen mit einem Sonnenrad (32) der nachgelagerten Stufe (30) drehbare, angetriebene Komponente (60), welche mit wenigstens einer Funktionsfläche (64) bereitgestellt ist;
- einen mit einer zylindrischen inneren lateralen Fläche (72) bereitgestellten, rohrförmigen Behälterkörper (70), in welchem die Anschläge (46a, 46b) der Antriebskomponente (42) und die Funktionsfläche (64) der angetriebenen Komponente (60) aufgenommen sind, welche zusammen mit der lateralen Fläche (72) des Behälterkörpers (70) eine Kammer (74) definieren, wobei die Funktionsfläche (64) derart geformt ist, dass die Kammern (74) in der Mitte eine maximale radiale Abmessung aufweisen und in Richtung der Umfangsenden verjüngt sind;
- angeordnet in der Kammer (74), ein Paar von Rollkörpern (82', 82"), welche an der Funktionsfläche (64) verschiebbar sind, und ein Abstandselement (84), welches zwischen den Rollkörpern (82', 82") platziert ist, um die zwei Rollkörper (82', 82") in Richtung der Umfangsenden der Kammer (74) zu halten;
wobei in einem ersten Betriebszustand, in welchem der Elektromotor eine abwärts gerichtete Drehung einführt, wenigstens einer der Anschläge (46b) in Kontakt mit einem der Rollkörper (82") gelangt und ihn in Richtung der Mitte der Kammer (74) drückt und die Antriebskomponente (42) den angetriebenen Körper (60) in Drehung in Eingriff nimmt; und
wobei in einem zweiten Betriebszustand, in welchem die Eingriffswelle (4) versucht, eine aufwärts gerichtete Drehung zu übertragen, sich der angetriebene Körper (60) derart dreht, dass er wenigstens einen der Rollkörper (82'), die relative Drehung mit der inneren Fläche (72) blockierend, in Richtung des Umfangsendes der Kammer (74) festkeilt, wodurch die Mitnahme in Drehung der Antriebskomponente (42) verhindert wird.

2. Antriebseinheit nach Anspruch 1, wobei das Abstandselement (84) ein elastisches Element ist, welches permanent zwischen den Rollkörpern (82', 82") wirkt, um diese wegzubewegen.

3. Antriebseinheit nach Anspruch 1 oder 2, wobei das Planetengetriebe drei Untersetzungsstufen enthält und die vorgelagerte Stufe (10) die erste Untersetzungsstufe ist, welche dem Elektromotor direkt nachgelagert platziert ist, und die nachgelagerte Stufe (30) die zweite Untersetzungsstufe ist.

4. Antriebseinheit nach Anspruch 1 oder 2, wobei das Planetengetriebe drei Untersetzungsstufen enthält und die vorgelagerte Stufe (10) die zweite Untersetzungsstufe ist und die nachgelagerte Stufe (30) die dritte Untersetzungsstufe ist, welche der Eingriffswelle (4) direkt vorgelagert platziert ist.

5. Antriebseinheit nach einem der vorhergehenden Ansprüche, wobei die Antriebskomponente (42) eine Basis (44) in der Form einer Platte umfasst, welche eine hintere Fläche (44a) und eine vordere Fläche (44b) aufweist, wobei die Anschläge (46a, 46b) axial von der vorderen Fläche (44b) vorstehen.

6. Antriebseinheit nach Anspruch 5, wobei die angetriebene Komponente (60) wenigstens eine radial vorstehende Ausstülpung (62) umfasst, welche mit einem Spiel in Umfangsrichtung zwischen den Anschlägen (46a, 46b) zweier angrenzender Paare aufgenommen sein kann.

7. Antriebseinheit nach einem der vorhergehenden Ansprüche, wobei die Funktionsfläche (64) ein Abschnitt einer kreisförmigen zylindrischen Fläche ist, welcher in Bezug auf die Hauptachse (Z) exzentrisch ist.

8. Antriebseinheit (1) zum Anheben und Absenken aufrollbarer Markisen oder Jalousien, umfassend:
- einen Elektromotor (2) und eine um eine Hauptachse (Z) drehbare Eingriffswelle (4), welche für eine Verbindung der aufrollbaren Markise oder Jalousien vorgesehen ist;
- ein zwischen dem Elektromotor (2) und der Eingriffswelle (4) platziertes Planetengetriebe, welches eine vorgelagerte Untersetzungsstufe (10) und eine nachgelagerte Untersetzungsstufe (30) umfasst;
- eine zwischen der vorgelagerten Stufe (10) und der nachgelagerten Stufe (30) platzierte Nichtumkehrbarkeitsvorrichtung (40), welche dazu geeignet ist, eine Drehung von vorgelagert zu nachgelagert zu übertragen und eine Drehung von nachgelagert zu vorgelagert zu blockieren;
**dadurch gekennzeichnet, dass** die Nichtumkehrbarkeitsvorrichtung umfasst
- eine zusammen mit Planetenrädern (14) der vorgelagerten Stufe (10) drehbare Antriebskomponente (42), welche mit wenigstens einem Paar in Umfangsrichtung voneinander beabstandeter Anschläge (46a, 46b) bereitgestellt ist;
- eine in Drehung mit der Antriebskomponente (42) in Eingriff bringbare und zusammen mit einem Sonnenrad (32) der nachgelagerten Stufe (30) drehbare, angetriebene Komponente (60), welche mit einem Paar von Funktionsflächen (64a, 64b) bereitgestellt ist;
- einen mit einer zylindrischen inneren lateralen Fläche (72) bereitgestellten, rohrförmigen Behälterkörper (70), in welchem die Anschläge (46a, 46b) der Antriebskomponente (42) und die Funktionsflächen (64a, 64b) der angetriebenen Komponente (64) aufgenommen sind, welche zusammen mit der lateralen Fläche (72) des Behälterkörpers (70) ein Paar von Kammern (74a, 74b) definieren, wobei die Funktionsflächen (64a, 64b) derart geformt sind, dass die Kammern (74a, 74b) in der Mitte eine maximale radiale Abmessung aufweisen und in Richtung der Umfangsenden verjüngt sind;
- angeordnet in jeder Kammer (74a, 74b), wenigstens einen Gleitkörper (82', 82"), welcher an der jeweiligen Funktionsfläche (64a, 64b) verschiebbar ist;
wobei in einem ersten Betriebszustand, in welchem der Elektromotor eine abwärts gerichtete Drehung einführt, jeder Anschlag (46a, 46b) in Kontakt mit einem der Gleitkörper (82', 82") gelangt, welcher auf ihn drückt, und der Antriebskörper (42) den angetriebenen Körper (60) in Drehung in Eingriff nimmt; und
wobei in einem zweiten Betriebszustand, in welchem die Eingriffswelle (4) versucht, eine aufwärts gerichtete Drehung zu übertragen, sich der angetriebene Körper (60) derart dreht, dass er den Gleitkörper (82', 82"), die relative Drehung mit der inneren Fläche (72) blockierend, in Richtung des Umfangsendes der jeweiligen Kammer (64a, 64b) festkeilt, wodurch die Mitnahme in Drehung der Antriebskomponente (42) verhindert wird.

9. Antriebseinheit nach Anspruch 8, wobei der Gleitkörper eine Erstreckung entlang der Umfangsrichtung aufweist.

10. Antriebseinheit nach Anspruch 8 oder 9, wobei der Gleitkörper aus einem Kunststoffmaterial hergestellt ist.

11. Antriebseinheit nach einem der Ansprüche 8 bis 10, wobei das Planetengetriebe drei Untersetzungsstufen enthält und die vorgelagerte Stufe (10) die erste Untersetzungsstufe ist, welche dem Elektromotor direkt nachgelagert platziert ist, und die nachgelagerte Stufe (30) die zweite Untersetzungsstufe ist.

12. Antriebseinheit nach einem der Ansprüche 8 bis 10, wobei das Planetengetriebe drei Untersetzungsstufen enthält und die vorgelagerte Stufe (10) die zweite Untersetzungsstufe ist und die nachgelagerte Stufe (30) die dritte Untersetzungsstufe ist, welche der Eingriffswelle (4) direkt vorgelagert platziert ist.

13. Antriebseinheit nach einem der Ansprüche 8 bis 12, wobei die Antriebskörper (42) eine Basis (44) in der Form einer Platte umfasst, welche eine hintere Fläche (44a) und eine vordere Fläche (44b) aufweist, wobei die Anschläge (46a, 46b) axial von der vorderen Fläche (44b) vorstehen.

14. Antriebseinheit nach einem der Ansprüche 8 bis 13, wobei jede Funktionsfläche (64a, 64b) ein Abschnitt einer kreisförmigen zylindrischen Fläche ist, welcher in Bezug auf die Hauptachse (Z) exzentrisch ist.

## Revendications

1. Unité d'entraînement (1) pour monter et baisser des volets roulants ou des stores, comprenant :
- un moteur électrique (2) et un arbre de mise en prise (4) rotatif autour d'un axe principal (Z), destiné à être raccordé au volet roulant ou aux stores ;
- un engrenage planétaire placé entre le moteur électrique (2) et l'arbre de mise en prise (4), comprenant un étage de réduction amont (10) et un étage de réduction aval (30) ;
- un dispositif d'irréversibilité (40) placé entre l'étage amont (10) et l'étage aval (30) approprié pour transmettre une rotation d'amont en aval et pour bloquer une rotation d'aval en amont ;
**caractérisée en ce que** ledit dispositif d'irréversibilité comprend
- un composant d'entraînement (42) rotatif conjointement avec des satellites (14) de l'étage amont (10), muni d'au moins une paire de butées (46a, 46b) espacées de manière circonférentielle ;
- un composant entraîné (60) apte à être mis en prise pour une rotation avec le composant d'entraînement (42) et rotatif conjointement avec une roue solaire (32) de l'étage aval (30), muni d'au moins une surface fonctionnelle (64) ;
- un corps de contenant tubulaire (70) muni d'une surface latérale interne cylindrique (72), dans lequel sont reçues les butées (46a, 46b) du composant d'entraînement (42) et la surface fonctionnelle (64) du composant entraîné (60), qui, conjointement avec la surface latérale (72) du corps de contenant (70), définissent un compartiment (74), dans lequel ladite surface fonctionnelle (64) est façonnée de sorte que les compartiments (74) possèdent une dimension radiale maximale au centre et sont effilés en direction des extrémités circonférentielles ;
- agencés dans le compartiment (74), une paire de corps roulants (82', 82") aptes à être déplacés sur la surface fonctionnelle (64) et un élément d'espacement (84) placé entre lesdits corps roulants (82', 82"), pour maintenir les deux corps roulants (82', 82") en direction des extrémités circonférentielles du compartiment (74) ;
dans laquelle, dans une première condition de fonctionnement dans laquelle le moteur électrique impose une rotation vers l'aval, au moins l'une desdites butées (46b) vient en contact avec l'un des corps roulants (82") et le pousse en direction du centre du compartiment (74) et le composant d'entraînement (42) vient en prise avec le corps entraîné (60) en rotation ; et
dans laquelle, dans une seconde condition de fonctionnement dans laquelle l'arbre de mise en prise (4) essaie de transmettre une rotation vers l'amont, le corps entraîné (60) tourne de façon à caler au moins l'un desdits corps roulants (82') en direction de l'extrémité circonférentielle du compartiment (74), en bloquant la rotation relative avec la surface interne (72), en évitant l'entraînement en rotation du composant d'entraînement (42).

2. Unité d'entraînement selon la revendication 1, dans laquelle l'élément d'espacement (84) est un élément élastique qui effectue une action permanente entre les corps roulants (82', 82") pour les éloigner.

3. Unité d'entraînement selon la revendication 1 ou 2, dans laquelle l'engrenage planétaire contient trois étages de réduction et l'étage amont (10) est le premier étage de réduction, placé directement en aval du moteur électrique, et l'étage aval (30) est le deuxième étage de réduction.

4. Unité d'entraînement selon la revendication 1 ou 2, dans laquelle l'engrenage planétaire contient trois étages de réduction et l'étage amont (10) est le deuxième étage de réduction et l'étage aval (30) est le troisième étage de réduction, placé directement en amont de l'arbre de mise en prise (4).

5. Unité d'entraînement selon l'une quelconque des revendications précédentes, dans laquelle le composant d'entraînement (42) comprend une base (44) sous la forme d'une plaque, ayant une face arrière (44a) et une face avant (44b), lesdites butées (46a, 46b) faisant saillie de manière axiale à partir de ladite face avant (44b).

6. Unité d'entraînement selon la revendication 5, dans laquelle ledit composant entraîné (60) comprend au moins une protubérance (62) faisant saillie de manière radiale, qui peut être reçue avec un jeu circonférentiel entre les butées (46a, 46b) de deux paires contiguës.

7. Unité d'entraînement selon l'une quelconque des revendications précédentes, dans laquelle la surface fonctionnelle (64) est une partie d'une surface cylindrique circulaire excentrique par rapport à l'axe principal (Z).

8. Unité d'entraînement (1) pour monter et baisser des volets roulants ou des stores, comprenant :
- un moteur électrique (2) et un arbre de mise en prise (4) rotatif autour d'un axe principal (Z), destiné à être raccordé au volet roulant ou aux stores ;
- un engrenage planétaire placé entre le moteur électrique (2) et l'arbre de mise en prise (4), comprenant un étage de réduction amont (10) et un étage de réduction aval (30) ;
- un dispositif d'irréversibilité (40) placé entre l'étage amont (10) et l'étage aval (30) approprié pour transmettre une rotation d'amont en aval et pour bloquer une rotation d'aval en amont ;
**caractérisée en ce que** ledit dispositif d'irréversibilité comprend
- un composant d'entraînement (42) rotatif conjointement avec des satellites (14) de l'étage amont (10), muni d'au moins une paire de butées (46a, 46b) espacées de manière circonférentielle ;
- un composant entraîné (60) apte à être mis en prise en rotation avec le composant d'entraînement (42) et rotatif conjointement avec une roue solaire (32) de l'étage aval (30), muni d'une paire de surfaces fonctionnelles (64a, 64b) ;
- un corps de contenant tubulaire (70) muni d'une surface latérale interne cylindrique (72), dans lequel sont reçues les butées (46a, 46b) du composant d'entraînement (42) et les surfaces fonctionnelles (64a, 64b) du composant entraîné (64), qui, conjointement avec la surface latérale (72) du corps de contenant (70), définissent une paire de compartiments (74a, 74b), dans laquelle lesdites surfaces fonctionnelles (64a, 64b) sont façonnées de sorte que les compartiments (74a, 74b) ont une dimension radiale maximale au centre et sont effilés en direction des extrémités circonférentielles ;
- agencés dans chaque compartiment (74a, 74b), au moins un corps coulissant (82', 82") apte à être déplacé sur la surface fonctionnelle respective (64a, 64b) ;
dans laquelle, dans une première condition de fonctionnement dans laquelle le moteur électrique impose une rotation vers l'aval, chaque butée (46a, 46b) vient en contact avec l'un des corps coulissants (82', 82") la poussant et le corps d'entraînement (42) vient en prise avec le corps entraîné (60) en rotation ; et
dans laquelle, dans une seconde condition de fonctionnement dans laquelle l'arbre de mise en prise (4) essaie de transmettre une rotation vers l'amont, le corps entraîné (60) tourne de façon à caler le corps coulissant (82', 82") en direction de l'extrémité circonférentielle du compartiment respectif (64a, 64b), en bloquant la rotation relative avec la surface interne (72), en évitant l'entraînement en rotation du composant d'entraînement (42).

9. Unité d'entraînement selon la revendication 8, dans laquelle le corps coulissant possède une extension le long de la direction circonférentielle.

10. Unité d'entraînement selon la revendication 8 ou 9, dans laquelle le corps coulissant est constitué de matière plastique.

11. Unité d'entraînement selon l'une quelconque des revendications 8 à 10, dans laquelle l'engrenage planétaire contient trois étages de réduction et l'étage amont (10) est le premier étage de réduction, placé directement en aval du moteur électrique, et l'étage aval (30) est le deuxième étage de réduction.

12. Unité d'entraînement selon l'une quelconque des revendications 8 à 10, dans laquelle l'engrenage planétaire contient trois étages de réduction et l'étage amont (10) est le deuxième étage de réduction et l'étage aval (30) est le troisième étage de réduction, placé directement en amont de l'arbre de prise (4).

13. Unité d'entraînement selon l'une quelconque des revendications 8 à 12, dans laquelle le corps d'entraînement (42) comprend une base (44) sous la forme d'une plaque, ayant une face arrière (44a) et une face avant (44b), lesdites butées (46a, 46b) faisant saillie de manière axiale à partir de ladite face avant (44b).

14. Unité d'entraînement selon l'une quelconque des revendications 8 à 13, dans laquelle chaque surface fonctionnelle (64a, 64b) est une partie d'une surface cylindrique circulaire excentrique par rapport à l'axe principal (Z).
